**Europäisches Patentamt**

(19) **European Patent Office**

**Office européen des brevets**

(11) Publication number: **0 106 321**
**B1**

(12) **EUROPEAN PATENT SPECIFICATION**

(45) Date of publication of patent specification: **04.07.90**

(21) Application number: **83110220.7**

(22) Date of filing: **13.10.83**

(51) Int. Cl.⁵: **G 11 B 5/127,** G 11 B 5/147

(54) **Amorphous magnetic head and a method of manufacturing the same.**

(30) Priority: **13.10.82 JP 180476/82**
**12.11.82 JP 199266/82**
**24.11.82 JP 206588/82**

(43) Date of publication of application:
**25.04.84 Bulletin 84/17**

(45) Publication of the grant of the patent:
**04.07.90 Bulletin 90/27**

(84) Designated Contracting States:
**DE FR GB**

(56) References cited:
**PATENTS ABSTRACTS OF JAPAN, vol. 6, no.**
**195 (P-146) 1073r, 5th October 1982; & JP - A - 57**
**105 816 (SONY K.K.) 01-07-1982**

**PATENTS ABSTRACTS OF JAPAN, vol. 3, no. 71**
**(E-118), 20th June 1979, page 156 E 118; & JP - A**
**- 54 51 505 (MATSUSHITA DENKI SANGOY K.K.)**
**23-04-1979**

**PATENTS ABSTRACTS OF JAPAN, vol. 4, no. 70**
**(P-12) 552r, 23rd May 1980; & JP - A - 55 38 640**
**(CANON K.K.) 18-03-1980**

(73) Proprietor: **SANYO ELECTRIC CO., LTD.**
**18, Keihanhondori 2-chome**
**Moriguchi-shi Osaka-fu (JP)**

(72) Inventor: **Matsuura, Kotaro**
**2-19-7, Osumigaoka Tanabe-cho**
**Tsuzuki-gun Kyoto-fu (JP)**
Inventor: **Oyamada, Kenji**
**5-B6-103, Yumigaoka Otokoyama**
**Yahata-shi Kyoto-fu (JP)**
Inventor: **Kumakiri, Michio**
**10-49, Asahigaoka-cho**
**Hirakata-shi Osaka-fu (JP)**

(74) Representative: **Glawe, Delfs, Moll & Partner**
**Patentanwälte**
**Postfach 26 01 62 Liebherrstrasse 20**
**D-8000 München 26 (DE)**

(56) References cited:
**PATENTS ABSTRACTS OF JAPAN, vol. 5, no.**
**134 (P-77) 806r, 26th August 1981; & JP - A - 56**
**71 820 (TOKYO DENKI KAGAKU KOGYO K.K.)**
**15-06-1981**

# EP 0 106 321 B1

(56) References cited:
IEEE TRANSACTIONS ON MAGNETICS, vol.
MAG-18, no. 5, September 1983, pages 1623-
1625, IEEE, New York, US; K. MATSUURA et al.:
"Amorphous video head for high coercive tape"

PATENTS ABSTRACTS OF JAPAN, vol. 7, no.
188 (P-217) 1333r, 17th August 1983; & JP - A -
58 88 813 (SANYO DENKI K.K.) 27-05-1983

## Description

The present invention relates to an amorphous magnetic head according to the preamble part of claim 1 and to a manufacturing method of such an amorphous magnetic head.

Generally, in a magnetic head for a video tape recorder (VTR), ferrite single crystal material is employed for a main core, because said material is superior in abrasion resistance, with favorable soft magnetic characteristics. Incidentally, owing to the recent trend toward compact size of video tape recorders, there has been a tendency that a material such as a metal tape and the like having a high coercive force and capable of achieving recording at a higher density is employed also for a magnetic tape, for example, as in the so-called 8 mm movie camera type video tape recorders. Different from the conventional $\gamma$-$Fe_2O_3$ tape, such metal tapes have a high coercive force, and therefore, if ferrite materials having saturation flux densities in the range of 4000 to 5000 gauss (0.4 to 0.5 Tesla) at most are adopted, the magnetic head is subjected to magnetic saturation, and can not effect magnetization by overcoming the coercive force of the metal tape. Accordingly, at present, investigations are made into the magnetic heads which employ Fe-Al-Si alloy (sendust) materials (saturation flux density Bs≈8000 gauss, 0.8 Tesla), amorphous material (saturation flux density Bs≈10,000 gauss, 1 Tesla), etc. having higher saturation flux densities as main cores, of which the sendust heads have already been supplied into the market as audio heads corresponding to metal tapes. However, the sendust heads as referred to above have various disadvantages for the heads of video tape recorders to be used in a higher frequency range (e.g. 5 MHZ or thereabout) in that machining thereof is difficult, while due to a low electrical resistance as compared with the ferrite material, the sendust heads have a large eddy current loss at high frequency range, with a sharp reduction of the effective permeability, and thus, the sendust heads have not been supplied as yet into the market for the heads of video tape recorders currently available.

On the other hand, with respect to the amorphous magnetic head, although attention has recently been directed to the amorphous material itself (during the past five years at most) as a future magnetic material for development both in Japan and abroad, the amorphous magnetic heads have not yet been put into practical application at the current stage.

As is well known, the amorphous material is obtained by a manufacturing method referred to as a liquid melt rapid cooling method, in which an amorphous material having an alloy composition not conceivable by the conventional knowledge of metallurgy may be produced in terms of principle. On the contrary, there is a limitation to the configurations of the material to be produced by the above manufacturing method. More specifically, since it is required to rapidly cool the molten metal at cooling speeds of 100,000 to 1,000,000°C/sec., the resultant amorphous material is obtainable only in the form of a ribbon-like sheet of 10 to 100 microns in thickness or in the form of a powder.

Accordingly, in the amorphous magnetic material, it is not possible to employ, as it is, the manufacturing method conventionally adopted for the ferrite material, i.e., the processing technique such as cutting, polishing, welding, etc. from a bulk material. However, in the case where the conventional manufacturing method as described above is to be followed somehow, it may be considered to employ a starting material prepared by laminating a large number of ribbon-like sheets one upon another (i.e., forming such ribbon-like sheets into a shape similar to the bulk material), thereby to constitute a magnetic head with a track width less than a thickness of the ribbon-like sheet, but since precise control of a thickness of a bonding material layer between the ribbon-like sheets can not be readily effected, it is extremely difficult to arrange the confronting core halves to face each other precisely.

Moreover, as a problem inherent in the amorphous material, there is the problem related to crystallization texperature Tx. Generally, amorphous materials prepared by the rapid cooling method have transition points of crystalline structure referred to as vitrification temperature Tg and crystallization temperature Tx. In connection with the above, the vitrification temperature is a temperature at which the amorphous material begins to be softened in the similar manner as in the common soda-lime glass, silica glass, etc., while the crystallization temperature is a temperature at which the amorphous structure is transferred to the crystalline structure. It is to be noted here that, different from glass in general, the amorphous material is not provided with reversibility during passing of the above transition points. In other words, once the amorphous structure has been turned into the crystalline structure, it will never be returned into the original amorphous state. Accordingly, for manufacturing magnetic heads with the use of such amorphous material as described above, it is not possible to apply thermal or mechanical energy exceeding the crystallization temperature Tx, while processing techniques such as glass welding, brazing, etc. for the conventional ferrite material, sendust material, etc. can not be applied, thus making it necessary to develop new processing and manufacturing techniques.

An amorphous magnetic head according to the preamble part of claim 1 is disclosed in JP—A— 57 105 816. In this magnetic head non-magnetic guards consisting of two separate halves are provided so that the junction in the middle of the magnetic head extends through the whole magnetic head and the core halves are merely held between the non-magnetic guards. Therefore, this known magnetic head shows low mechanical strength affecting life time as well as functional stability.

Accordingly, the object of the present invention is to provide an amorphous magnetic head, which is capable of efficiently recording high frequency signals such as video signals, etc. on a high coercive tape such as a metal tape, with a simultaneous prolongation of life, which is stable in functioning, has high reliability and can be readily manufactured at low cost.

This object is achieved by an amorphous magnetic head having the features given in the independent claim 1. The dependent claims 2—7, are related to further developments of the invention.

A further object of the present invention is to provide a method of manufacturing an amorphous magnetic head of the above described type in an efficient manner on a large scale.

The amorphous magnetic head of the present invention as described above may be produced by a manufacturing method according to claims 8 to 14.

By the arrangement and steps according to the present invention, an amorphous magnetic head highly efficient in use has been advantageously presented.

Brief description of the drawings

These and other objects and features of the present invention will become apparent from the following description taken in conjunction with the preferred embodiment thereof with reference to the accompanying drawings, in which:

Fig. 1 is a perspective view, partly broken away, of an amorphous magnetic head according to one preferred embodiment of the present invention;

Figs. 2(a) and 2(b) are a top plan view and a front elevational view of the magnetic head of Fig. 1;

Fig. 3 is a flow-chart for explaining a manufacturing process of the magnetic head of Fig. 1;

Fig. 4 is a fragmentary top plan view of an amorphous ribbon to be employed in the manufacture of the magnetic head of Fig. 1;

Fig. 5 is the fragmentary top plan view of the amorphous ribbon of Fig. 4 after etching;

Figs. 6(a) and 6(b) are perspective views showing states in which core chips prepared from the amorphous ribbon of Fig. 5 are accommodated in jigs;

Figs. 7(a) and 7(b) are views similar to Figs. 6(a) and 6(b), which particularly show the states after grinding;

Fig. 8 is a view similar to Figs. 7(a) and 7(b), which particularly shows provision of a spacer;

Fig. 9 is an exploded perspective view of the magnetic head of Fig. 1 before assembly;

Fig. 10 is a side elevational view of the magnetic head of Fig. 9 as assembled;

Fig. 11 is a view similar to Fig. 10 explanatory of combination of respective elements into one unit by a resinous material;

Figs. 12(a) and 12(b) are a top plan view and a front elevational view of the magnetic head as released from a jig;

Figs. 13, 14(a) and 14(b) are perspective views of magnetic heads according to modifications of the present invention;

Figs. 15 and 16 are a side elevational view and a perspective view for explaining a modified method of manufacturing an amorphous magnetic head according to the present invention;

Fig. 17 is a side elevational view similar to Fig. 15 for explaining another modified method of manufacturing an amorphous magnetic head of the present invention;

Figs. 18 and 19 are a side elevational view and a perspective view similar to Figs. 15 and 16 for explaining still another modified method of manufacturing an amorphous magnetic head according to the present invention;

Figs. 20 and 21 are a perspective view and a side elevational view of an amorphous magnetic head according to another modification of the present invention;

Fig. 22 is a flow-chart for explaining a manufacturing method of an amorphous magnetic head according to a further modification of the present invention;

Fig. 23 is a fragmentary top plan view of an amorphous ribbon to be employed in the modified manufacturing method of Fig. 22;

Fig. 24 is a fragmentary top plan view of the amorphous ribbon of Fig. 23 after etching;

Figs. 25 and 26 are fragmentary perspective views of a number of series of core halves as accommodated in a jig for explaining grinding process of confronting surfaces of the core halves;

Fig. 27 is a view similar to Fig. 26, which particularly shows the process for providing spacers;

Fig. 28 is a fragmentary top plan view for explaining a temporary fixing process of first and second series of core halves;

Fig. 29(a) is a fragmentary top plan view for explaining a joining process of reinforcing members and cores; and

Fig. 29(b) is a side sectional view taken along the line XXIX(b)—XXIX(b) in Fig. 29(a) and rotated by 90°.

Detailed description of the invention

Before the description of the present invention proceeds, it is to be noted that like parts are designated by like reference numerals throughout the accompanying drawings.

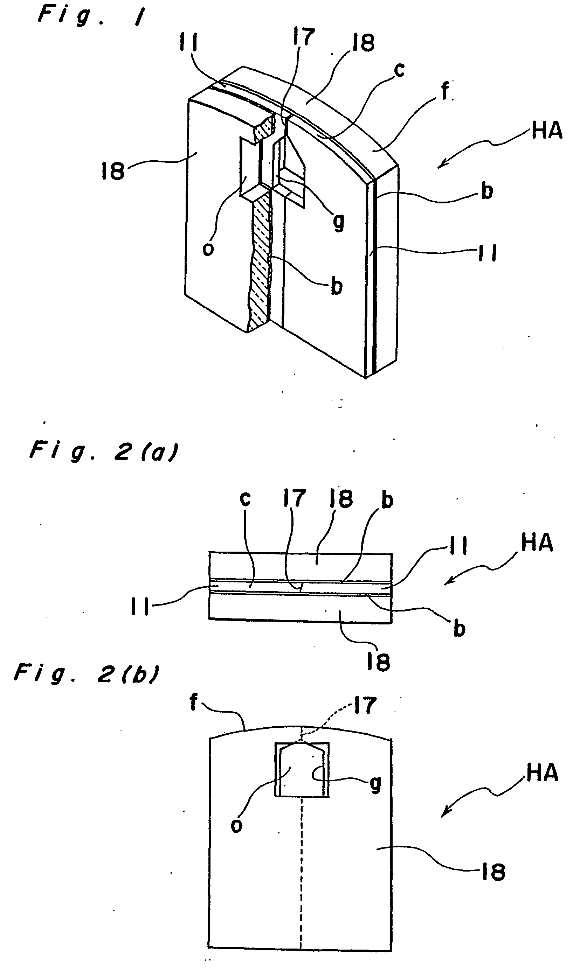

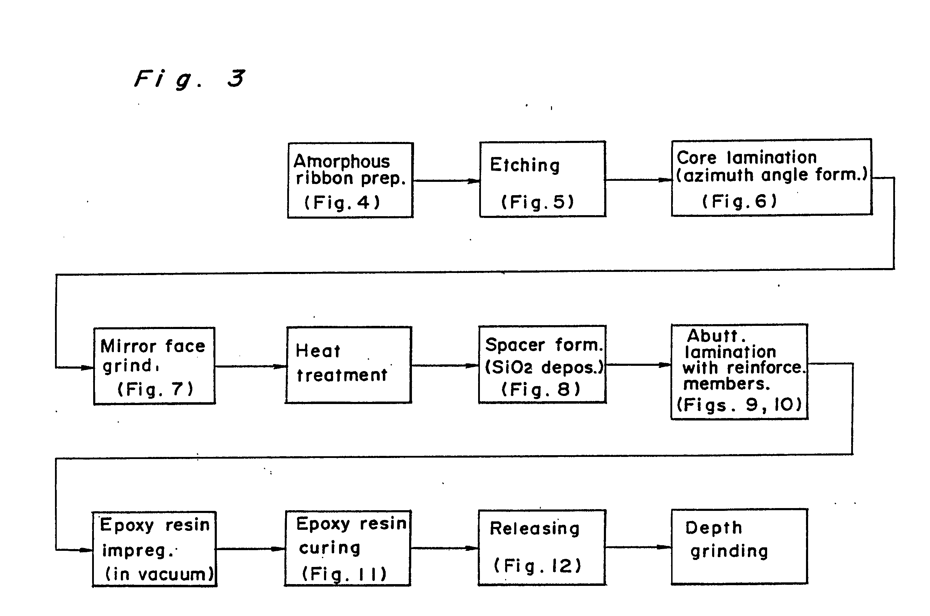

Referring now to the drawings, there is shown, in Figs. 1 to 2(b), an amorphous magnetic head HA according to one preferred embodiment of the present invention. The magnetic head HA generally comprises a main core c which includes core halves 11 abutted against each other and each formed by shaping a non-laminated thin plate or sheet (24 microns in thickness) of an amorphous magnetic material, a pair of reinforcing members 18 for holding the main core c therebetween, and layers b of a bonding material (less than 2 microns in thickness) each applied between the main core c and the reinforcing member 18 so as to be cured or hardened. Each of the core halves 11 is formed with a notch or groove g as a coil winding opening between the abutted faces thereof, while a spacer 17 of a non-magnetic material for forming a front gap is provided at the upper portion of the groove g. Each of the reinforcing members 18 made, for example, of glass material is formed with a through-hole o in a position corresponding to the groove g or coil winding opening of the main core c so as to make it possible to effect the so-called balance winding of the coils (not particularly shown) therethrough.

The magnetic head HA is ground for providing a predetermined radius of curvature on its contact face f confronting a magnetic tape (not shown) so as to achieve a proper matching with respect to the magnetic tape during running of said magnetic tape.

Meanwhile, since the magnetic head HA is extremely small in size with dimensions of about 3 mm square and several hundred microns in thickness, the side faces of the reinforcing members 18 are connected to a head base (not particularly shown), with the contact face f of the head HA being projected from said head base for easiness in handling.

The magnetic head HA according to the present invention which is formed by arranging the core halves 11 made of non-laminated thin sheets of the amorphous magnetic material to be abutted against each other, and applying the reinforcing members 18 of glass material to opposite sides of the core halves 11, with infiltration of resin or bonding agent b therebetween for the formation of the entire structure into one unit, can be manufactured at a high yield.

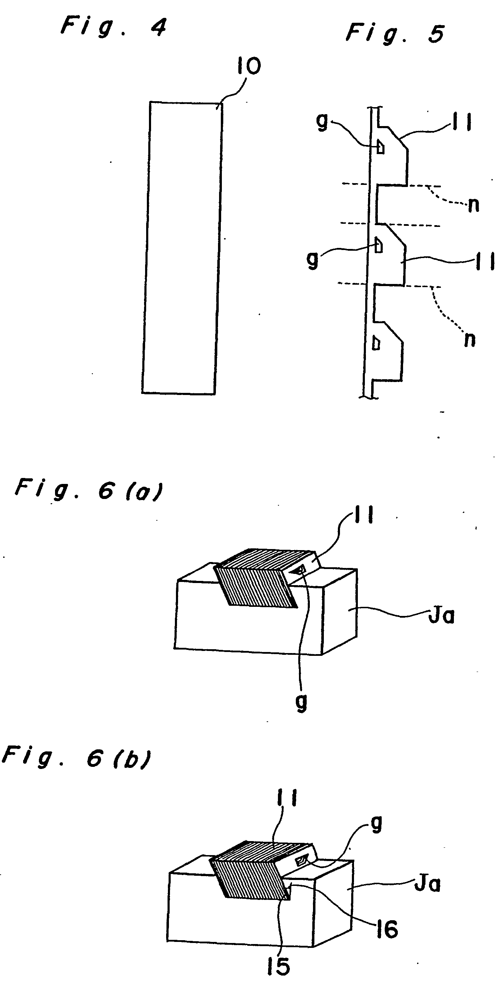

Referring further to a flow-chart of Fig. 3 and also, to Figs. 4 to 11 illustrating states of processings at respective steps, the outline of the method of manufacturing the magnetic head according to the present invention will be explained hereinbelow.

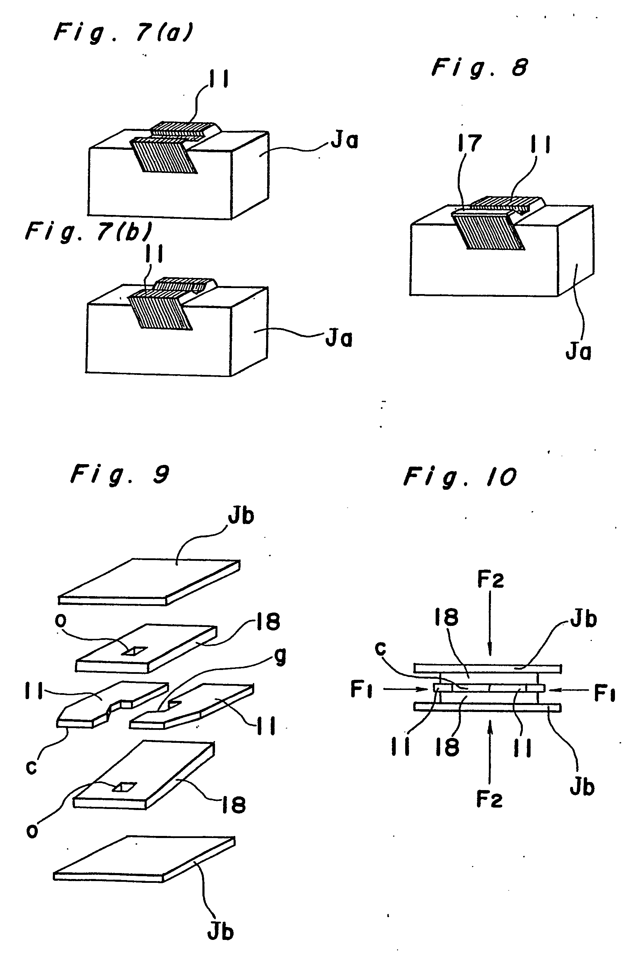

In the first place, a thin sheet or ribbon 10 of the amorphous material approximately 24 microns or so in thickness is prepared by the liquid melt rapid cooling method as described earlier (Fig. 4), and a series of core halves 11 of a required shape are formed in the above ribbon 10 by a chemical etching (Fig. 5), with a through-opening for the groove g being formed in each of the core halves 11 for winding the coil therethrough. The series of core halves 11 thus prepared are cut off along dotted lines n to obtain a large number of core halves or core chips 11. As shown in Figs. 6(a) and 6(b), the core chips 11 are accommodated in a jig Ja so that the through-openings are arranged in a forward position at one side, and in a rearward position at the other side, and are first subjected to rough grinding so as to remove sagging and the like by the etching for setting the core halves 11 into the predetermined dimensions. Subsequently, the front gap forming face of the magnetic head is ground through employment of very fine grinding grains and a grinding machine. Figs. 7(a) and 7(b) show the states upon termination of the above grinding.

In the above case, an angle 16 for accommodating the core halves 11 with respect to a wall surface 15 of the jig Ja (Fig. 6(b)) is arranged to coincide with an azimuth angle of the magnetic head.

The core chips 11 ground as described above are detached from the jig Ja for a heat treatment, which is intended to remove stresses due to the rapid cooling and mechanical processing during manufacture of the amorphous material, and also, to eliminate a grinding strain imparted during the above grinding process. Generally, by applying such heat treatment, the permeability of cores may be improved, because a weak magnetic anisotropy actually remains in the lengthwise and widthwise directions of the ribbon of amorphous material due to temperature gradient and mechanical stress during the rapid cooling of the ribbon, although the amorphous material having no crystalline structure should normally be free from crystalline anisotropy in terms of principle. In the above embodiment, since the amorphous material employed is of metal metalloid series (75% of Fe, Co series, 25% of semi-metals such as Si, B, P and C), with Curie temperature Tc at 450° and crystallization temperature Tx at approximately 500°C, the temperature is raised to the vicinity of a point below Curie temperature Tc and the heat treatment is effected in the magnetic field (especially, rotating magnetic field).

Subsequently, as shown in Fig. 8, the large number of core chips 11 are again laminated within the jig Ja, and a spacer 17 of non-magnetic material such as $SiO_2$, TiN, SiN, WN or the like is formed on the surface equivalent to the front gap by a predetermined gap length (for example, 0.4 to 0.05 micron in horizontal direction in Fig. 2b) through vapor deposition or ion plating. It may be so arranged that the predetermined gap length is achieved through combination with other core halves.

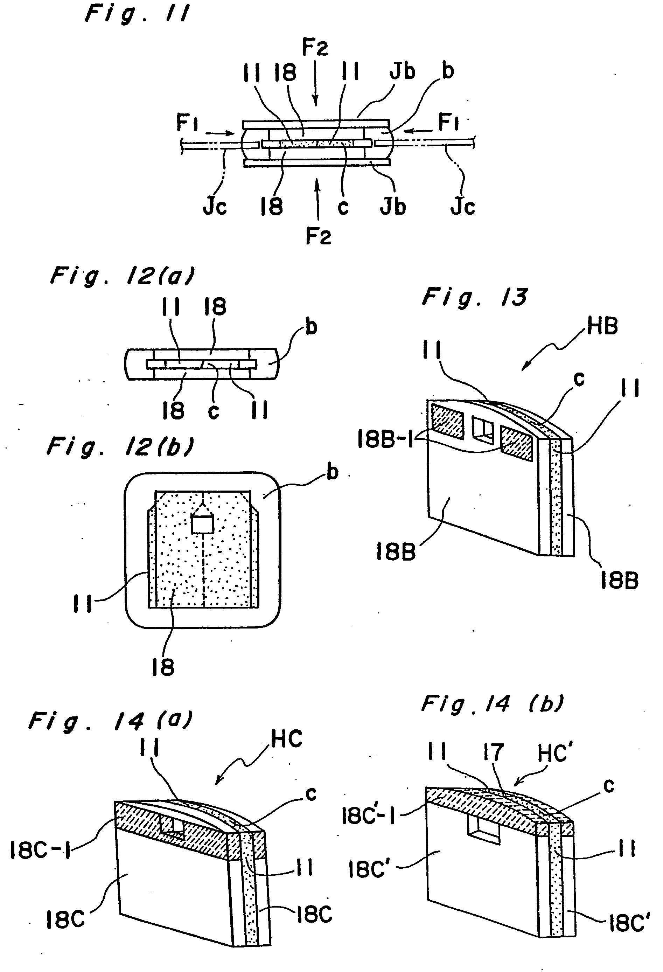

Thereafter, as shown in Fig. 9, a set of core halves 11 and separately prepared reinforcing members 18 of glass material are disposed between sheets Jb, for example, of Teflon® as a jig, and the core halves 11 are depressed from opposite sides by forces F1 of 10 to 100 grams as shown in Fig. 10, while the whole structure is vertically depressed by forces F2 through the sheets Jb. For facilitation of depression of the core halves 11 as described above, for example, by a jig Jc (Fig. 11), each of the core halves 11 is arranged to laterally project from the reinforcing member 18 to a certain extent.

With the depressed state as described above maintained, the whole structure of the magnetic head is impregnated with epoxy resin in the vacuum state, with a subsequent hardening or curing through heating (by leaving to stand at a temperature of 100°C for 60 to 90 minutes), and thus, the reinforcing members 18 and core halves 11 are combined into one unit together with the depressing jig Jc between the sheets Jb as shown in Fig. 11. After curing of the epoxy resin, the structure thus combined is released from the sheets Jb and jig Jc (Figs. 12(a) and 12(b)) and is properly shaped for its tape contacting face or the like with further provision of coils, etc., and thus, the magnetic head as shown in Fig. 1 is obtained.

The material for the sheets Jb is not limited to ethylene tetrafluoride or trifluoride (e.g. Teflon®) as described above, but may be replaced by any material such as polyethylene, polypropylene or the like so far as it can be utilized as a solid releasing material to which epoxy resin does not adhere. However, releasing material in a liquid form is not suitable for the purpose, since it tends to penetrate into gap portions of the head or between the reinforcing members and cores for undesirable reduction of the bonding strength therebetween.

Moreover, it is preferable that the reinforcing members 18 are constituted by a dense material of a non-magnetic and non-conductive nature such as ceramics, etc. besides glass as described earlier, because a sintered material having air bubbles or voids therein tend to be subjected to clogging by the magnetic particles from the magnetic tape, thus resulting in an increased spacing loss. Forming the reinforcing members 18 by a metallic material is not preferable, since recording efficiency is extremely reduced by an anti-magnetic field produced in the metallic reinforcing members during the recording, but is suitable for a magnetic head exclusive for reproduction, because such metallic reinforcing members function to improve reproducing efficiency during the reproduction.

Referring to Figs. 13 and 14(b), there are shown modifications of the magnetic head HA as described so far. In the modified magnetic head HB of Fig. 13, the reinforcing members 18B made of a metallic material has coil winding portions 18B-1 of non-metallic material as indicated by hatchings, which in the modified magnetic head HC of Fig. 14(a), the reinforcing members 18C made of a metallic material also have coil winding portions 18C-1 of non-metallic material as shown by hatchings. The magnetic heads HB and HC of the above described type may be used as heads both for recording and reproduction. In another modified magnetic head HC' in Fig. 14(b), the reinforcing members 18C' are made of a magnetic ferrite material, while the portion 18C'-1, at least corresponding to the spacer 17 should be made of a non-magnetic material, for example, glass in order to prevent magnetic shortcircuiting. In connection with the above, it is to be noted that, in a laboratory experiment, required reproduction output of the magnetic head may be obtained even when the reinforcing members are entirely made of a glass material, but considerable care and attention are required for the processings. When the reinforcing members are constructed in the manner as described above with reference to Figs. 13, 14(a) or 14(b), the reproduction output of the magnetic head can be readily improved. Since other constructions and effects of the magnetic heads HB, HC and HC' are generally similar to those of the magnetic head HA of Fig. 1, detailed description thereof is abbreviated for brevity.

As is clear from the foregoing description, according to the present invention, it is so arranged that core halves formed into the predetermined shape from the amorphous magnetic thin material manufactured by the liquid melt rapid cooling method, without fundamentally effecting the processing in the direction of thickness of said amorphous material, are abutted against each other, while the reinforcing members are further applied to the core halves from opposite sides thereof, with resin being filled therebetween to be hardened for integration of the magnetic head structure, and therefore, magnetic heads for high frequency range having the main cores of amorphous magnetic material superior in magnetic characteristics may be manufactured at a favorable yield in production.

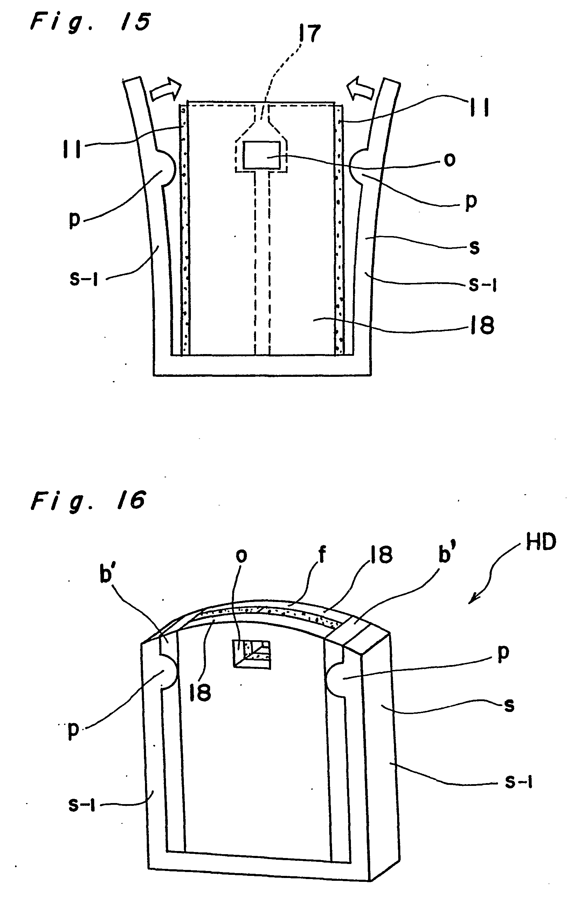

Referring further to Figs. 15 and 16, there is shown a modified method of manufacturing an amorphous magnetic head. In this modification, the jigs Jb and Jc, etc. described as employed for keeping the core halves 11 in pressure contact with each other together with the reinforcing members 18 for the formation of the head gap in the foregoing embodiments are replaced by a resilient spring frame S made, for example, of non-magnetic metal or resinous material, and formed by chemical etching or blanking through processing by a machine to have a size just sufficient to accommodate therein an assembly of the core halves 11 and reinforcing members 18.

More specifically, as shown in Fig. 15, the resilient spring frame S is provided with side portions S-1 having projections p for depressing the core halves 11. With said side portions S-1 slightly opened outwardly at upper ends thereof, and the frame S is fitted around the assembly including the core halves 11 abutted against each other through the non-magnetic spacer 17 and held between the reinforcing members 18 as described previously, with the bonding material b' being applied between the side edges of said assembly and the inner edges of the frame S, whereby the core halves 11 are pressed against each other at the projections p by the spring force of the side portions S-1 in the directions shown by arrows to provide the amorphous magnetic head HD as shown in Fig. 16.

After completion of the assembling of the magnetic head, the frame S may be removed from the magnetic head or left as it is on the magnetic head depending on necessity.

By the above modified method, the jigs required for the manufacture of the amorphous magnetic heads may be dispensed with for the simplification of the manufacturing process.

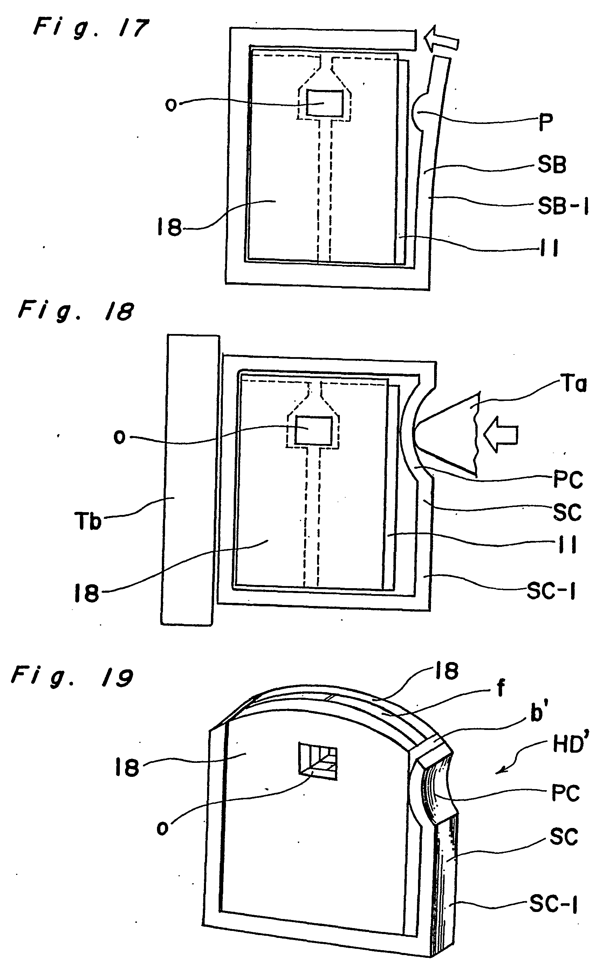

In another modified method as shown in Fig. 17, the frame SB made, for example, of a metallic material having a resiliency such as phosphor bronze, stainless steel, etc. has its one side portion SB-1 cut off at one end and provided with a projection p so as to act as a spring for effecting abutting of the core halves 11, (i.e. formation of the head gap) by the resilient restoring force of said side portion SB-1. In this case also, the frame SB may be removed or left as it is after completion of the magnetic head, but if the frame SB is to be left on the magnetic head as in the arrangement of Fig. 16, non-magnetic material should be used for the frame SB.

In still another modified method as illustrated in Figs. 18 and 19, the frame SC with a continuous side portions has a protrusion pc formed in one side portion SC-1 thereof as shown. For use, the frame SC is fitted around the assembly including the core halves 11 and the reinforcing members 18, and the protrusion pc is pushed inwardly in a direction indicated by an arrow in Fig. 18 by a depressing plate Ta, with the frame SC being supported at the other side by a support plate Tb for abutting the core halves 11 against each other by depressing one of the core halves 11 at the protrusion pc so as to form the head gap. After impregnation of the bonding material b' and subsequent curing in the manner as described earlier, the magnetic head thus assembled is subjected to formation of the predetermined radius of curvature at the tape contact surface f and depth adjustment to provide a finished magnetic head HD' as shown in Fig. 19. For the convenience in the coil winding, the frame should preferably be of non-magnetic material, but in the case where the frame is to be detached from the magnetic head after impregnation of the bonding material b and subsequent curing thereof, the frame need not necessarily be of non-magnetic material.

By the employment of the frames according to the present invention as described so far with reference to Figs. 15 to 19, positioning of the amorphous core halves and reinforcing members during assembly of the magnetic head has been facilitated, and furthermore, by preventing core halves from rotation during abutting thereof, it becomes possible to stably obtain favorable head gaps, with a consequent improvement of the yield in the abutting step in the manufacture of the magnetic heads.

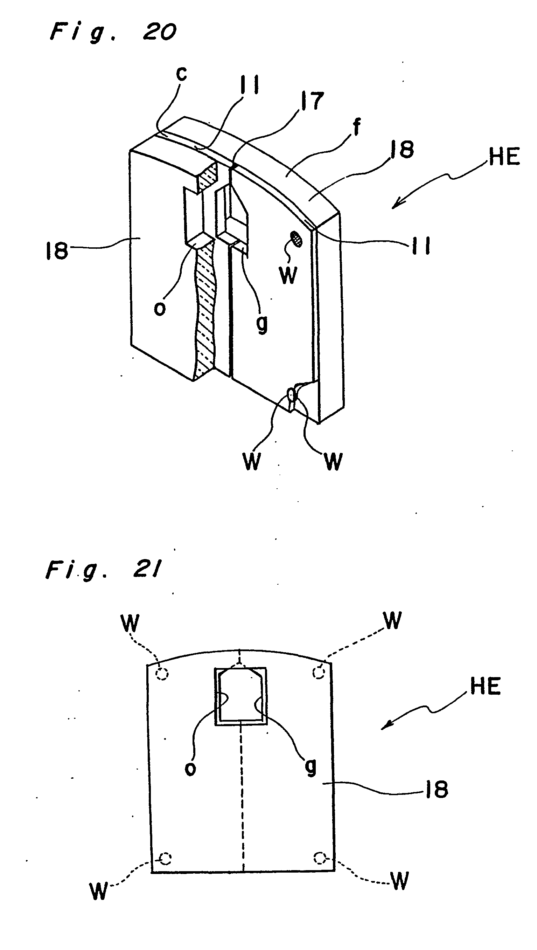

In Figs. 20 and 21, there is shown another modification of the amorphous magnetic head of Fig. 1.

In the modified amorphous magnetic head HE of Figs. 20 and 21, the core halves 11 abutted against each other through the non-magnetic spacer 17 and held between the reinforcing members 18 are formed into one unit with said reinforcing members 18 by partially fusing the core halves 11, instead of employing the resinous material b for integration as in the magnetic head HA of Fig. 1.

More specifically, as shown in Figs. 20 and 21, the magnetic head HE includes, for example, welded portions w disposed at corresponding four corners thereof. These welded portions w may be formed by directing laser beams from laser beam sources (not particularly shown) onto the assembly which includes the core halves 11 abutted against each other through the non-magnetic spacer 17 so as to be held between the reinforcing members 18, and which is depressed both in the vertical and lateral directions as described earlier. In other words, the laser beams pass through the reinforcing members 20 of transparent glass material so as to be converted into heat on the surface of the core halves 11 made of the amorphous magnetic material for fusing corresponding portions thereof. Thereafter, upon interruption of the laser beam irradiation, the core halves 11 and the reinforcing members 18 contacting said core halves 11 are welded together during solidification of the molten material. By effecting the operations as described above successively or simultaneously at the respective corner portions on the opposite faces of the main core c having the core halves 11, the integration of the main core c with the reinforcing members 18 is completed. The size or diameter of each of the welded portions w may be set approximately in the range of 1 to 2 microns.

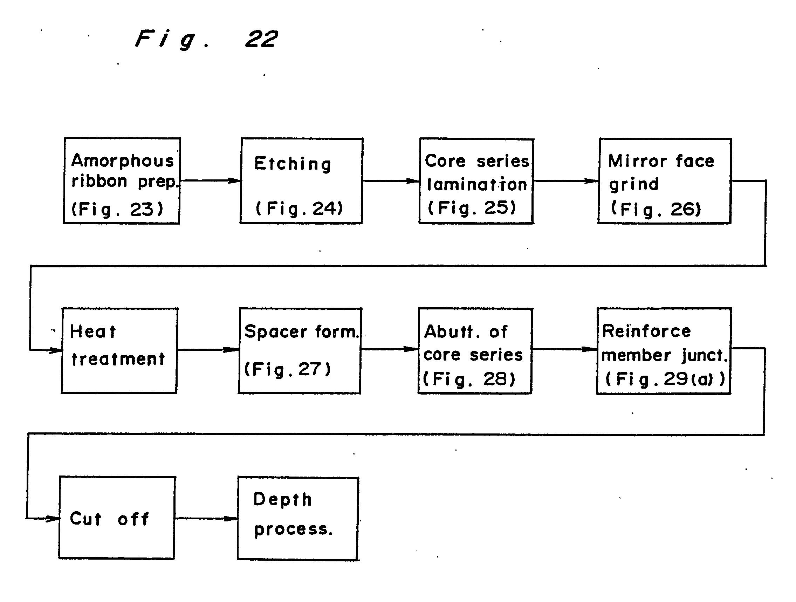

Referring further to Figs. 22 to 29(b), still another modification of the method of manufacturing the amorphous magnetic head according to the present invention, which is particularly suited to mass production, will be explained hereinbelow.

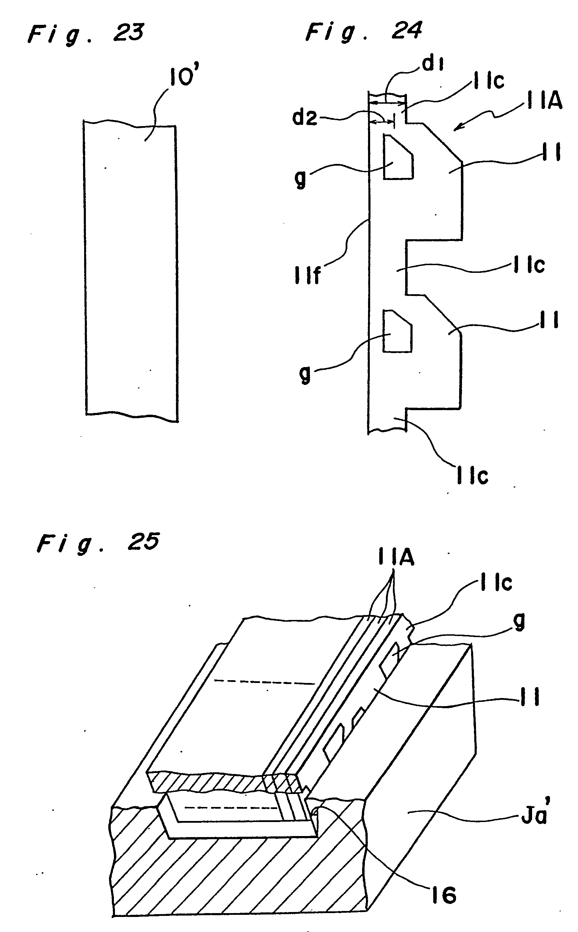

Firstly, the ribbon 10' of the amorphous material approximately 24 microns or so in thickness is prepared by the liquid melt rapid cooling method in the similar manner as described earlier (Fig. 23). A first series 11A of core halves 11 of a required shape are formed in the above ribbon 10' by the chemical etching (Fig. 24), with the through-opening for the groove g being formed in each of the core halves 11 for winding the coil therethrough. The first series 11A of core halves 11 thus prepared is shown in the state before the surface 11f thereof corresponding to a second series 11B of core halves 11 to be described later is formed through cutting. The plurality of core halves 11 and connecting portions 11c are alternately provided, with a width d1 of each connecting portion 11c being arranged to be sufficiently larger than a width d2 which is to be cut off during formation of the surface 11f.

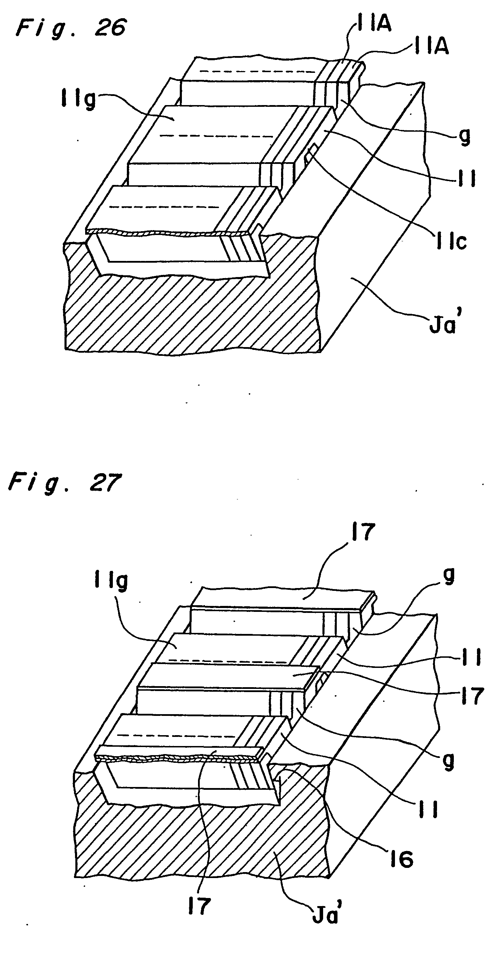

As shown in Fig. 25, many first series 11A of core halves 11 as described above are laminated in the direction of thickness so as to be accommodated in the jig Ja' and are first subjected to rough grinding so as to remove sagging and the like due to the etching for setting the core halves 11 into the predetermined dimensions. Subsequently, the front gap forming face 11g thereof is ground through employment of very fine grinding grains and a grinding machine. It is to be noted that the accommodating angle 16 of the first series 11A of core halves 11 with respect to the wall face of the jig Ja' is adapted to coincide with the azimuth angle in the similar manner as described earlier with reference to Fig. 6(b). Fig. 26 shows the state upon termination of the grinding.

Each of the series 11A of core halves 11 ground as described above is detached from the jig Ja' for the heat treatment in the manner as described earlier with reference to the first embodiment of Figs. 1 to 12(b).

Subsequently, as shown in Fig. 27, the large number of the series of core halves 11 are again laminated within the jig Ja', and the spacers 17 of non-magnetic material such as $SiO_2$, TiN, SiN, WN or the like are formed on the surface 11g equivalent to the front gap by a predetermined gap length (for example, 0.4 to 0.05 micron in horizontal direction in Fig. 26) through vapor deposition or ion plating. It may be so arranged that the predetermined gap length is achieved through combination with other core halves in the similar manner as in the previous embodiment.

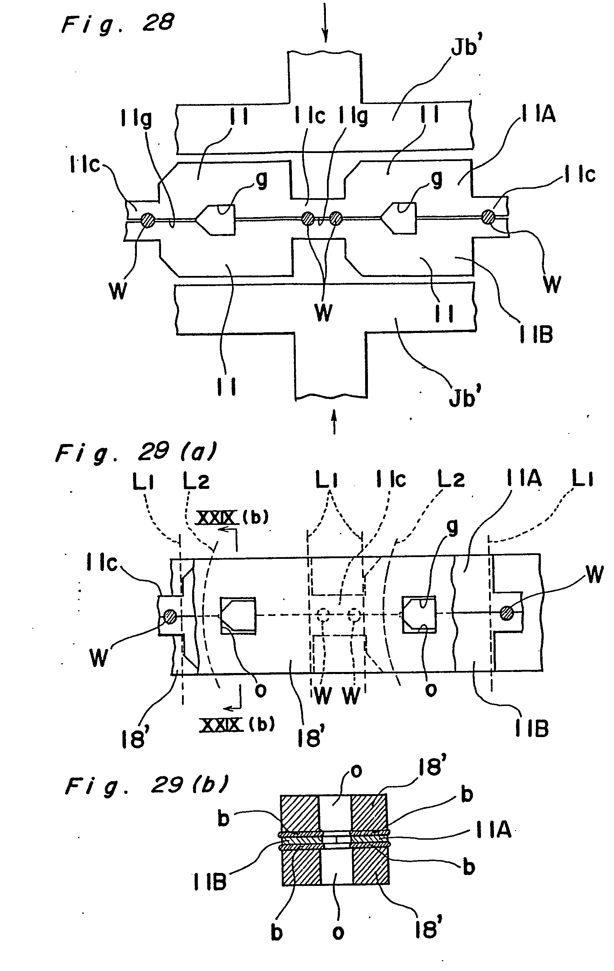

Thereafter, as shown in Fig. 28, the first series 11A and the second series 11B of core halves 11 are disposed so that the front gap forming surfaces 11g and the coil winding openings g of the respective series 11A and 11B coincide with each other, and abutted against each other through depression by the jig Jb'. In the above state, laser beams are irradiated onto both of the series 11A and 11B of core halves 11 so as to bridge the respective connecting portions 11c by welding therebetween to effect temporary connection as indicated at the spots w.

In the next step, as shown in Figs. 29(a) and 29(b), the series 11A and 11B of the core halves 11 temporarily combined with each other as described above are held between the reinforcing members 18' having the through-openings o corresponding to the coil winding openings g so that the openings o confront the openings g, and epoxy resin is impregnated between the series 11A and 11B of the core halves 11 and the respective reinforcing members 18' in the vacuum state for heat curing by being left to stand for 60 to 90 minutes at 100°C. In Fig. 29(b), the layers of epoxy resin or bonding material thus formed are represented by "b".

In the manner as described above, the respective series 11A and 11B of the core halves 11 are bonded to the reinforcing members 18' for integration therewith.

Subsequently, as shown by dotted lines L1 in Fig. 29(a), the assembly thus obtained is cut off into individual chips of magnetic heads, whose contact surfaces with respect to the magnetic tape are ground for a proper radius of curvature matched with the magnetic tape as indicated by dotted lines L2 so as to provide a required gap depth.

By the method as described so far, the amorphous magnetic head, for example, as shown in Fig. 1 may be manufactured in an efficient manner on a large scale.

In the above manufacturing method of Figs. 22 to 29(b), since it is so arranged that one set of the series of core halves are temporarily connected to each other by welding the connecting portions for connecting the plurality of core halves so as to be bonded to the reinforcing members in such a state, the depression in the direction to push the core halves to each other is not required during the bonding, with the depression only from the side of the reinforcing members, i.e. in the vertical two directions sufficiently serving the purpose, thus resulting in a facilitation of bonding work and consequently, in an improved efficiency for the mass production of the magnetic head.

## Claims

1. An amorphous magnetic head (HA) which comprises: a main core (c) including a pair of core halves (11) each formed from non-laminated thin sheets of amorphous magnetic material, said main core (c) having a coil winding opening (g) formed in opposite side faces thereof, said core halves (11) being abutted against each other with a non-magnetic spacer (17) forming a functioning gap disposed at a portion between an operating face of said magnetic head and the coil winding opening (g) of said main core (c); and a pair of reinforcing members (18) applied to said opposite side faces to hold said core halves (11) therebetween, characterized in that each said reinforcing member (18) is unitary, said core halves (11) are of the same shape, said reinforcing members (18) and said core halves (11) are combined into one unit by bonding means connecting said opposite side faces to said reinforcing members (18).

2. An amorphous magnetic head as claimed in claim 1, wherein said bonding means is an epoxy resin layer located between said opposite side faces and said reinforcing members (18).

3. An amorphous magnetic head as claimed in claim 2, wherein said epoxy resin has a curing temperature lower than the Curie temperature and the cristallisation temperature of said amorphous magnetic material.

4. An amorphous magnetic head as claimed in claim 1, wherein said reinforcing members (18) are made of metallic material and the coil winding region thereof is formed by a non-metallic material.

5. An amorphous magnetic head as claimed in claim 1, wherein said reinforcing members (18) are made of a glass material and said bonding means includes a spot-welded joint connecting said opposite side faces to said reinforcing members (18) at predetermined welding spots (w).

6. An amorphous magnetic head as claimed in claim 5, wherein said spot-welded joints are formed by partially laser-fused portions of the core halves (11) at said predetermined welding spots (w).

7. An amorphous magnetic head as claimed in claim 5 or 6, wherein said predetermined welding spots (w) are provided one at each of the four corners of the amorphous magnetic head.

8. A method of manufacturing an amorphous magnetic head, which comprises a first step of forming from a sheet of amorphous material a series of connected core halves (11), each core half having a portion removed so that when the two core halves are abutted against each other to form a main core a coil winding opening (g) is formed in opposite sides faces of the main core, a second step of cutting off individual core halves from the sheet and placing said core halves in a jig (Ja), a third step of grinding the faces to be abutted to remove excess material and polishing to form an appropriate azimuth angle and depositing a non-magnetic spacer (17) for forming a non-magnetic gap along a first portion of one of the faces to be abutted so that when the core halves are abutted against each other the spacer is positioned between the operating face of the magnetic head and said coil winding opening, and a fourth step of removing said core halves from the jig and abutting pairs of said core halves against each other and applying a unitary reinforcing member (18) to opposite side faces of the main core under pressure while establishing a bond for joining said opposite side faces to said reinforcing members, thus to form a magnetic head.

9. A method as claimed in claim 8, wherein a frame (S, SB, SC) is fitted around the assembly formed by the core halves (11) and the reinforcing members (18) for effecting the abutting of the core halves (11) against each other for formation of the head gap.

10. A method as claimed in claim 9, wherein said frame (S, SB, SC) is provided with projection means (p) for depressing said core halves (11).

11. A method as claimed in claim 9, wherein said frame (S, SB, SC) is made of a resilient material having a spring force so as to depress the core halves (11) by a resilient restoring force thereof.

12. A method as claimed in claim 8, wherein said bond is established by impregnating a resinous bonding layer between said opposite side faces and said reinforcing members.

13. A method as claimed in claim 8, wherein said bond is established by spot welding said opposite side faces to the reinforcing members.

14. A method of manufacturing an amorphous magnetic head, which comprises a first step of forming from a sheet of amorphous material a series of connected core halves (11), each core half having a portion removed so that when the two core halves are abutted against each other to form a main core a coil winding opening (g) is formed in opposite side faces of the main core, a second step of placing a plurality of sheets containing a plurality of series connected core halves in a jig (Ja'), a third step of grinding the faces to be abutted to remove excess material and polishing to form an appropriate azimuth angle and depositing a non-magnetic spacer for forming a non-magnetic gap along a first portion of one of the faces to be abutted so that when the core halves are abutted against each other the spacer is positioned between the operating face of the magnetic head and said coil winding opening, and a fourth step of releasing said plurality of sheets from the jig (Ja') and abutting a sheet containing a plurality of series connected core halves against a corresponding sheet, so as to form a plurality of main cores temporarily bonded by spot welding and applying a unitary reinforcing member (18') to said opposite sides faces of the plurality of main cores and establishing a bond for joining said opposite side faces to said reinforcing memebrs, and a firth step of forming a plurality of magnetic heads in which the core halves are formed into one unit by said reinforcing members from said core halves sheets by cutting off said spot welded portions of said core halves sheets.

**Patentansprüche**

1. Amorpher Magnetkopf (HA), welcher umfaßt: Einen Hauptkern (c) mit einem Paar von Kernhälften (11), die beide aus nicht laminierten dünnen Platten aus amorphem magnetischen Material gebildet sind, wobei der Hauptkern (c) eine Spulenwicklungsöffnung (g) aufweist, die in dessen gegenüberliegenden Seitenflächen ausgebildet ist, wobei die Kernhälften (11) mit einem eine Funktionslücke bildenden nichtmagnetischen Distanzstück (17), das an einem Abschnitt zwischen einer Arbeitsfläche des Magnetkopfes und der Spulenwicklungsöffnung (g) des Hauptkern (c) angeordnet ist, aneinander anstoßen; und ein Paar Verstärkungselementen (18), die an den entgegensetzten Seitenflächen aufgebracht sind, um die Kernhälften (11) dazwischen festzuhalten, dadurch gekennzeichnet, daß jedes der Verstärkungselemente (18) einstückig ist, wobei die Kernhälften (11) die gleiche Form haben, wobei die Verstärkungselemente (18) und die Kernhälften (11) durch Bindemittel, die die entgegengesetzten Seitenflächen mit den Verstärkungselementen (18) verbinden, zu einer Einheit verbunden sind.

2. Amorpher Magnetkopf nach Anspruch 1, in dem das Bindemittel eine Epoxyharzschicht ist, die zwischen den entgegengesetzten Seitenflächen und den Verstärkungselementen (18) angebracht ist.

3. Amorpher Magnetkopf nach Anspruch 2, in dem das Epoxyharz eine geringere Härtungstemperatur hat als die Curie-Temperatur und die Kristallisationstemperatur des amorphen magnetischen Materials.

4. Amorpher Magnetkopf nach Anspruch 1, in dem die Verstärkungselemente (18) aus metallischem Material hergestellt sind und deren Spulenwicklungsbereich aus einem nichtmetallischen Material gebildet wird.

5. Amorpher Magnetkopf nach Anspruch 1, in dem die Verstärkungselemente (18) aus einem Glasmaterial hergestellt sind und das Bindemittel eine punktgeschweißte Verbindung, die die entgegengesetzten Seitenflächen mit den Verstärkungselementen (18) an vorbestimmten Schweißpunkten (w) verbindet, umfaßt.

6. Amorpher Magnetkopf nach Anspruch 5, in dem die punktgeschweißten Verbindungen aus partiell lasergeschmolzenen Bereichen der Kernhälften (11) an den vorbestimmten Schmelzpunkten (w) gebildet sind.

7. Amorpher Magnetkopf nach Anspruch 5 oder 6, in dem die vorbestimmten Schmelzpunkte (w) jeweils einzeln an den vier Ecken des amorphen Magnetkopfes vorgesehen sind.

8. Verfahren zum Herstellen eines amorphen Magnetkopfes, das umfaßt einen ersten Schritte zum Bilden einer Reihe von verbundenen Kernhälften (11) aus einer Platte aus amorphem Material, wobei jede Kernhälfte einen Abschnitt ausgespart hat, so daß, wenn die zwei Kernhälften aneinander anstoßen, um einen Hauptkern zu bilden, eine Spulenwicklungsöffnung (g) in den gegenüberliegenden Seitenflächen des Hauptkern ausgebildet wird, einen zweiten Schritt zum Heraustrennen einzelner Kernhälften aus der Platte und Anordnen der Kernhälften in einer Setzvorrichtung (Ja), einem dritten Schritt zum Schleifen der Stoßflächen, um Überschußmaterial zu entfernen und zum Polieren, um einen geeigneten Azimuthwinkel zu bilden und zum Anordnen eines nichtmagnetischen Distanzstükkes (17), um eine nichtmagnetische Lücke entlang eines ersten Abschnitts einer der Stoßflächen zu bilden, so daß das Distanzstück, wenn die Kernhälften aneinander anstoßen, zwischen den Arbeitsflächen des Magnetkopfes und der Spulenwicklungsöffnung angeordnet ist, und einen vierten Schritt zum Entfernen der Kernhälften aus der Setzvorrichtung und zum Aneinanderbringen von Paaren von Kernhälften und zum Aufbringen eines einstückigen Verstärkungselementes (18) auf entgegengesetzte Seitenflächen des Hauptkerns unter Druck, während eine Bindung zum Verbinden der entgegengesetzten Seitenflächen mit den Verstärkungselementen hergestellt wird, um so einen Magnetkopf zu bilden.

9. Verfahren nach Anspruch 8, in dem ein Rahmen (S, SB, SC) um die aus den Kernhälften (11) und den Verstärkungselementen (18) gebildeten Anordnung herum angeordnet wird, um das Aneinanderbringen der Kernhälften (11) zur Bildung der Kopfspalte zu bewirken.

10. Verfahren nach Anspruch 9, in dem der Rahmen (S, SB, SC) mit Vorsprungselementen (p) zum Herunterdrücken der Kernhälften (11) versehen ist.

11. Verfahren nach Anspruch 9, in dem der Rahmen (S, SB, SC) aus einem elastischem Material hergestellt ist, mit einer Federkraft, um so die Kernhälften (11) durch deren elastischer Rückholkraft herunterzudrücken.

12. Verfahren nach Anspruch 8, in dem die Verbindung durch Imprägnieren einer Harzbindeschicht zwischen den entgegengesetzten Seitenflächen und den Verstärkungselementen hergestellt wird.

13. Verfahren nach Anspruch 8, in dem die Verbindung durch Punktverschweißen der entgegengesetzten Seitenflächen mit den Verstärkungselementen hergestellt wird.

14. Verfahren zum Herstellen eines amorphen Magnetkopfes, das umfaßt einen ersten Schritt zum Bilden einer Reihe von verbundenen Kernhälften (11) aus einer Platte aus amorphem Material, wobei jede Kernhälfte einen ausgesparten Bereich aufweist, so daß, wenn zwei Kernhälften aneinander stoßen, um einen Hauptkern zu bilden, eine Spulenwicklungsöffnung (g) in den gegenüberliegenden Seitenflächen des Hauptkerns gebildet wird, einen zweiten Schritt zum Anordnen einer Vielzahl von Platten, die eine Vielzahl von verbundenen Kernhälftenserien enthalten, in einer Setzvorrichtung (Ja'), einem dritten Schritt zum Schleifen der Stoßflächen, um Überschußmaterial zu entfernen und zum Polieren, um einen passenden Azimuthwinkel zu bilden und zum Anordnen eines nichtmagnetischen Distanzstückes, um einen nichtmagnetische Spalt entlang eines ersten Abschnittes einer der Stoßflächen zu bilden, so daß, wenn die Kernhälften aneinandergestoßen werden, das Distanzstück zwischen der Arbeitsfläche des Magnetkopfes und der Spulenwicklungsöffnung angeordnet ist, und einen vierten Schritt zum Freigeben einer Vielzahl von Platten aus der Setzvorrichtung (Ja') und zum Aneinanderbringen einer Platte, die eine Vielzahl von in Reihe verbundener Kernhälften enthält, mit einer entsprechenden Platte, um so eine Vielzahl von Hauptkernen zu bilden, die vorübergehend durch Punktschweißen verbunden sind und zum Aufbringen eines einstückigen Verstärkungselementes (18') auf die entgegengesetzten Seitenflächen der Vielzahl von Hauptkernen und zum Herstellen einer Bindung, um die entgegengesetzten Seitenflächen mit den Verstärkungselementen zu verbinden, und einen fünften Schritt zum Bilden einer Vielzahl von Magnetköpfen, in denen die Kernhälften durch die Verstärkungselemente der Kernhälftenplatten in einer Einheit ausgebildet sind, indem die punktgeschweißten Bereiche der Kernhälftenplatten durchgetrennt werden.

**Revendications**

1. Tête magnétique amorphe (HA) qui comprend: un noyau principal (c) comprenant deux demi-noyaux (11) formés chacun de minces feuilles non feuilletes d'un matériau magnétique amorphe, le noyau principal (c) ayant une ouverture (g) d'enroulement d'un bobinage, formée à ses faces latérales opposées, les demi-noyaux (11) étant en butée l'un contre l'autre, une entretoise non magnétique (17) formant un entrefer de fonctionnement placé dans une partie comprise entre une face de travail de la tête magnétique et l'ouverture (g) d'enroulement d'un bobinage du noyau principal (c), et deux organes de renforcement (18) appliqués aux faces latérales opposées afin que les demi-noyaux (11) soient maintenus entre eux, caractérisée en ce que chacun des organes de renforcement (18) est en une seule pièce, les demi-noyaux (11) ont la même forme, et les organes de renforcement (18) et les demi-noyaux (11) sont combinés sous forme d'un tout par un dispositif de liaison raccordant les faces latérales opposées aux organes de renforcement (18).

2. Tête magnétique amorphe selon la revendication 1, dans laquelle le dispositif de liaison est une couche d'une résine époxyde placée entre les faces latérales opposées et les organes de renforcement (18).

3. Tête magnétique amorphe selon la revendication 2, dans laquelle la résine époxyde a une température de durcissement inférieure à la température de Curie et à la température de cristallisation du matériau magnétique amorphe.

4. Tête magnétique amorphe selon la revendication 1, dans laquelle les organes de renforcement (18) sont formés d'un matériau métallique, et la région d'enroulement du bobinage de ces organes est formée par un matériau non métallique.

5. Tête magnétique amorphe selon la revendication 1, dans laquelle les organes de renforcement (18) sont formés d'un matériau vitreux et le dispositif de liaison comprend un joint soudé par points, raccordant les faces latérales opposées aux organes de renforcement (18) à des points prédéterminés de soudage (w).

6. Tête magnétique amorphe selon la revendication 5, dans laquelle les joints soudés par points sont formés par des parties de demi-noyaux (11) partiellement fondues au laser aux points prédéterminés de soudage (w).

7. Tête magnétique amorphe selon la revendication 5 ou 6, dans laquelle les points prédéterminés de soudage (w) sont disposés chacun à l'un des quatre coins de la tête magnétique amorphe.

8. Procédé de fabrication d'une tête magnétique amorphe, qui comprend une première étape de formation, à partir d'une feuille d'un matériau amorphe, d'une série de demi-noyaux (11) raccordés les uns aux autres, chaque demi-noyau ayant une partie supprimée afin que, lorsque les deux demi-noyaux sont mis en butée l'un contre l'autre afin qu'ils forment le noyau principal, une ouverture (g) d'enroulement d'un bobinage soit formée aux faces latérales opposées du noyau principal, une seconde étape de découpe des demi-noyaux individuels de la feuille et de disposition des demi-noyaux dans un dispositif de montage (Ja), une troisième étape de rectification des faces qui doivent être en butée afin que l'excès de matériau soit retiré et que les faces soient polies avec un angle azimutal convenable, et de dépôt d'une entretoise non magnétique (17) destinée à former un entrefer non magnétique le long d'une première partie de l'une des faces qui doivent être mises en butée, si bien que, lorsque les demi-noyaux sont mis en butée l'un contre l'autre, l'entretoise est placée entre la face de travail de la tête magnétique et l'ouverture d'enroulement de bobinage, et une quatrième étape d'extraction des demi-noyaux du dispositif de montage, de mise en butée de paires de demi-noyaux, les uns contre les autres, et d'application d'un organe (18) de renforcement en une seule pièce sur les faces latérales opposées du noyau principal, avec application d'une pression et établissement d'une liaison de raccordement des faces latérales opposées aux organes de renforcement, si bien qu'une tête magnétique est formée.

9. Procédé selon la revendication 8, dans lequel un cadre (S, SB, SC) est monté autour de l'ensemble formé par les demi-noyaux (11) et les organes de renforcement (18) afin qu'il assure la mise en butée des demi-noyaux (11) l'un contre l'autre lors de la formation de l'entrefer de la tête.

10. Procédé selon la revendication 9, dans lequel le cadre (S, SB, SC) a un dispositif en saillie (p) destiné à repousser les demi-noyaux (11).

11. Procédé selon la revendication 9, dans lequel le cadre (S, SB, SC) est formé d'un matériau élastique ayant une force d'élasticité telle qu'il repousse les demi-noyaux (11) par la force de rappel élastique.

12. Procédé selon la revendication 8, dans lequel la liaison est établie par introduction d'une couche résineuse de liaison entre les faces latérales opposées et les organes de renforcement.

13. Procédé selon la revendication 8, dans lequel la liaison est établie par soudage par points des faces latérales opposées aux organes de renforcement.

14. Procédé de fabrication d'une tête magnétique amorphe, qui comprend une première étape de formation, à partir d'une feuille d'un matériau amorphe, d'une série de demi-noyaux (11) qui sont raccordés chaque demi-noyau ayant une partie retirée afin que, lorsque deux demi-noyaux sont mis en butée l'un contre l'autre pour la formation d'un noyau principal, une ouverture (g) d'enroulement de bobinage soit formée aux faces latérales opposées du noyau principal, une seconde étape de disposition de plusieurs feuilles contenant plusieurs demi-noyaux raccordés en série dans un dispositif de montage (Ja'), une troisième étape de. rectification des faces qui doivent être en butée afin que l'excès du matériau soit retiré et que les surfaces soient polies avec un angle azimutal convenable, et le dépôt d'une entretoise non magnétique destinée à former un entrefer non magnétique le long d'une première partie de l'une des faces qui doivent être mises en butée, si bien que, lorsque les demi-noyaux sont mis en butée l'un contre l'autre, l'entretoise est placée entre la face de travail de la tête magnétique et l'ouverture de l'enroulement de bobinage, et une quatrième étape de libération des ensembles de feuilles du dispositif de montage (Ja') et de mise en butée d'une feuille contenant plusieurs demi-noyaux raccordés en série contre une feuille correspondante, afin que plusieurs noyaux principaux temporairement reliés par soudage par points soient formés, et l'application d'un organe de renforcement en une seule pièce (18') aux faces latérales opposées des noyaux principaux et l'établissement d'une liaison destinée à relier les faces latérales opposées aux organes de renforcement, et une cinquième étape de formation de plusieurs têtes magnétiques dans lesquelles les demi-noyaux sont mis sous forme d'un tout à l'aide des organes de renforcement des feuilles des demi-noyaux par découpe des parties soudées par points des feuilles des demi-noyaux.

Fig. 1

Fig. 2(a)

Fig. 2(b)

# Fig. 3

Amorphous ribbon prep. (Fig. 4) → Etching (Fig. 5) → Core lamination (azimuth angle form.) (Fig. 6)

Mirror face grind. (Fig. 7) → Heat treatment → Spacer form. (SiO2 depos.) (Fig. 8) → Abutt. lamination with reinforce. members. (Figs. 9, 10)

Epoxy resin impreg. (in vacuum) → Epoxy resin curing (Fig. 11) → Releasing (Fig. 12) → Depth grinding

*Fig. 4*   *Fig. 5*

*Fig. 6(a)*

*Fig. 6(b)*

*Fig. 7(a)*

11

Ja

*Fig. 7(b)*

11

Ja

*Fig. 8*

17  11

Ja

*Fig. 9*

Jb

0

18

11

g

11

c

18

0

Jb

*Fig. 10*

F2

18

c

Jb

F1

F1

11  18

11

Jb

F2

4

Fig. 11

Fig. 12(a)

Fig. 13

Fig. 12(b)

Fig. 14 (a)

Fig. 14 (b)

Fig. 15

Fig. 16

Fig. 17

O

18

P

SB

SB-1

11

Fig. 18

O

Tb

18

Ta

PC

SC

11

SC-1

Fig. 19

18

18

O

f

b'

HD'

PC

SC

SC-1

Fig. 20

Fig. 21

# Fig. 22

```
┌──────────────┐     ┌──────────────┐     ┌──────────────┐     ┌──────────────┐
│ Amorphous    │     │ Etching      │     │ Core series  │     │ Mirror face  │
│ ribbon prep. │────▶│              │────▶│ lamination   │────▶│ grind        │──┐
│ (Fig. 23)    │     │ (Fig. 24)    │     │ (Fig. 25)    │     │ (Fig. 26)    │  │
└──────────────┘     └──────────────┘     └──────────────┘     └──────────────┘  │
  ┌──────────────────────────────────────────────────────────────────────────────┘
  │  ┌──────────────┐     ┌──────────────┐     ┌──────────────┐     ┌──────────────┐
  │  │ Heat         │     │ Spacer form. │     │ Abutt. of    │     │ Reinforce    │
  └─▶│ treatment    │────▶│              │────▶│ core series  │────▶│ member junct.│──┐
     │              │     │ (Fig. 27)    │     │ (Fig. 28)    │     │ (Fig. 29(a)) │  │
     └──────────────┘     └──────────────┘     └──────────────┘     └──────────────┘  │
  ┌──────────────────────────────────────────────────────────────────────────────────┘
  │  ┌──────────────┐     ┌──────────────┐
  │  │              │     │ Depth        │
  └─▶│ Cut  off     │────▶│              │
     │              │     │ process.     │
     └──────────────┘     └──────────────┘
```

Fig. 23

Fig. 24

Fig. 25

Fig. 26

Fig. 27

Fig. 28

Fig. 29 (a)

Fig. 29 (b)